# EUROPÄISCHE PATENTANMELDUNG

(11) **EP 2 489 571 A1**
(43) Veröffentlichungstag der Anmeldung: **22.08.2012**
(21) Anmeldenummer: 11154819.4
(22) Anmeldetag: 17.02.2011
(51) Int. Cl.: B61L 5/02, F16B 37/08

(54) **Schieberstangenanordnung für Weichenzungen**

(71) Anmelder: Siemens Schweiz AG, 8047 Zürich (CH)
(72) Erfinder: Raskovic, Bojan, 8037 Zürich (CH); Infanger, Andreas, 8197 Rafz (CH)
(74) Vertreter: Kley, Hansjörg

(57) **Zusammenfassung**

Es wird eine Schieberstangenanordnung (1) für Weichenzungen angegeben, die hinsichtlich der Position des Lagers (11) relativ zur Schieberstange (13) fein einstellbar ist und auf einfache und zuverlässige Weise eine Fixierung der gefundenen Einstellung der Länge erlaubt. Diese Schieberstangenanordnung (1) weist folgende wesentliche Elemente auf:
- Eine Backe (14) mit einem Innengewinde (18) wird in Eingriff mit dem Aussengewinde (17) der Schieberstange gebracht, wobei die Backe eine Ausnehmung (21) aufweist und so über das Aussengewinde der Schieberstange verschiebbar ist. Durch Drehen der Backe (14) ist die Position des Lagers (11) festlegbar.
- die Ausnehmung (21) der Backe (14) ist zur Aufnahme eines Schiebers (16) vorgesehen ist, der mit der Schieberstange (13) formschlüssig verbindbar ist und so die Backe (14) gegen eine Verdrehung in der Endposition schützt.

## Beschreibung

Die vorliegende Erfindung bezieht sich auf eine Schieberstangenanordnung für Weichenzungen gemäss dem Oberbegriff des Patentanspruchs 1.

Eine Eisenbahnweiche umfasst verschiebbare Weichenzungen. Die Weichenzungen (paarig pro Weiche) werden mit einer Schieberstange bewegt. Eine solche Schieberstange ist bekannt aus DE 199 62 518 A1 [2]. Gemäss DE 199 62 518 A1 [2] ist die Form der Stange so gewählt, dass zusätzliche Komponenten im Gleiskörperbereich oberhalb der Schieberstange eingebaut werden können.

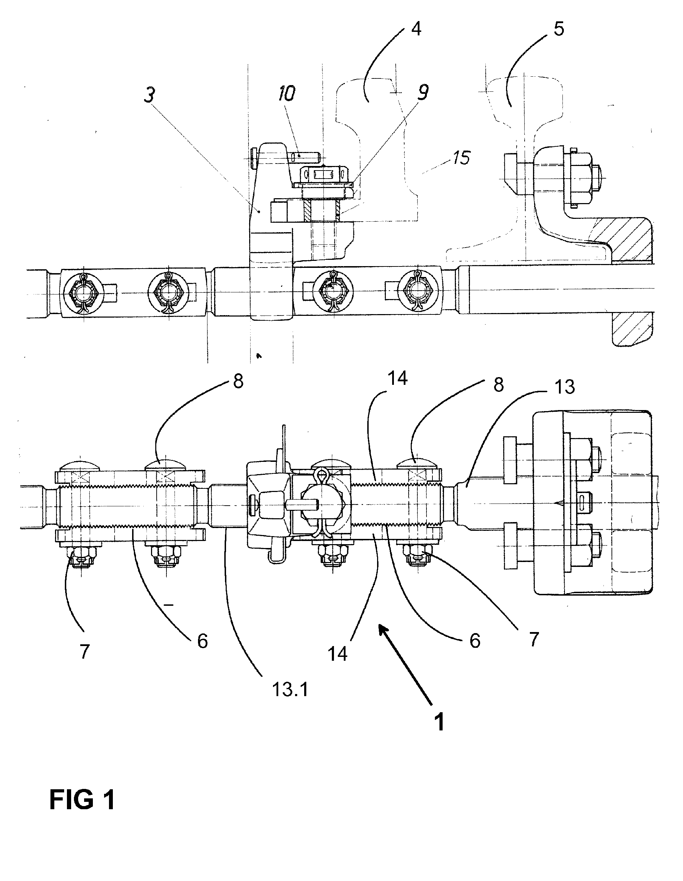

Für die Montage einer Weiche, müssen die Schieberstangen hinsichtlich ihrer Länge einstellbar sein. FIG 1 zeigt eine Lösung der Deutschen Bahn AG: Eine Stockschiene 4 ist über eine Zungengabel 3 (auch Lager 3 genannt) mit einer Schieberstange 13.1 verbunden. Der Einfachheit werden die Schieberstangenteile 13.1 auch mit Schieberstange bezeichnet. Die übrigen Komponenten im Gleisbereich werden hier nicht erläutert und können der FIG 1 entnommen werden. Die Schieberstange 13.1 ist bezüglich der Schieberstange 13 über Backen 24 in einem der Verzahnung 6 vorgegeben Raster verschiebbar. Dies bewirkt dann eine Längenverstellbarkeit der Schieberstange. Dazu müssen die Schrauben 8 und die zugehörigen Muttern 7 gelöst werden. Diese Lösung ist mit folgenden Nachteilen behaftet:
- Das Raster gemäss der Verzahnung ist relativ grob;
   typischerweise 3mm;
- die Einstellung erfordert einigen manuellen Aufwand.

In der Schrift DE 298 02 122 U1 [1] wird eine Schieberstange offenbart, bei der ein Zwischenstück vorgesehen ist, das axial je ein Innengewinde aufweist. Die Aussenabschnitte der Schieberstange sind mit je einem Aussengewinde versehen. Diese Aussenabschnitte können über die vorgenannten Gewinde mit dem Zwischenstück in Eingriff gebracht werden. Durch entsprechendes Drehen der Aussenabschnitte lässt sich so die Länge der Schieberstange einstellen. Zur Fixierung - also ein Schutz gegen Verdrehen - der gefundenen Einstellung sind bei den Aussenabschnitten Muttern und Gegenmuttern vorgesehen. Diese Lösung gemäss der Schrift DE 298 02 122 U1 [1] hat den Vorteil einer genauen Einstellbarkeit der Länge. Diese Lösung ist aber nach wie vor nachteilig hinsichtlich des Aufwands zur Fixierung der gefundenen (Längen-) Einstellung.

Der vorliegenden Erfindung liegt daher die Aufgabe zugrunde eine Schieberstangenanordnung für Weichenzungen anzugeben, die hinsichtlich der Position des Lagers relativ zur Schieberstange fein einstellbar ist und auf einfache und zuverlässige Weise eine Fixierung der gefundenen Einstellung der Länge erlaubt.

Diese Aufgabe wird durch die in den unabhängigen Patentansprüchen angegebenen Massnahmen gelöst.

Dadurch dass

die zur Festlegung einer Position des Lagers 11 relativ zur Schieberstange 13 eine Backe 14 mit einem Innengewinde 18 in Eingriff mit dem Aussengewinde (17) in Eingriff gebracht wird, wobei die Backe 14 eine Ausnehmung 21 zum Einschieben über das Aussengewinde 17 aufweist und durch eine Vierteldrehung der Backe 14 die Position des Lagers 11 festlegbar ist und dass
die Ausnehmung 21 zur Aufnahme eines Schiebers 16 vorgesehen ist, der mit der Schieberstange 13 formschlüssig verbindbar ist und so die Backe 14 gegen eine Verdrehung in der Endposition geschützt ist.

ist eine Schieberstangenanordnung geschaffen, bei der die Position des Lagers relativ zur Schieberstange quasikontinuierlich einstellbar ist und zur Fixierung und zum Schutz gegen Verdrehung der Backe lediglich einen Schieber benötigt. Es sind keine Muttern und Gegenmuttern zur Fixierung erforderlich und somit ist der Montageaufwand gegenüber den aus dem Stand der Technik bekannten Lösungen deutlich verringert. Quasikontinuierlich bedeutet eine Einstellung in der Grössenordnung <= Gewindesteigung. Durch eine geeignete Wahl der Gewindesteigung lässt sich die Granularität der Einstellbarkeit weiter optimieren.

Vorteilhafte Ausgestaltungen der Erfindung sind in weiteren Ansprüchen angegeben.

So können sich die folgenden Vorteile zusätzlich ergeben:

i) Die Ausnehmung in der Backe hat zwei Funktionen:
1. Die Ausnehmung erlaubt das Einschieben der Backe über das Gewinde der Schieberstange.
2. Die Ausnehmung dient zur Sicherung der Backe gegen Verdrehung

ii) Der in die Ausnehmung im Innern der Backe formschlüssig eingeführte Schieber schützt die Backe wirksam gegen Verdrehen. Auf die Sicherungsschraube des Schiebers wirken keine Kräfte von der Backe ein, lediglich das Herausfallen des Schiebers aus der Backe muss gesichert werden.

iii) Durch entsprechendes Dimensionieren der Länge des Innengewindes der Backe kann sicher gestellt werden, dass trotz des reduzierten Gewindeumfangs die Backe sicher gegen axiale Überlast geschützt ist. Die Aussengewindelänge der Schieberstange ist grösser als die Innengewindelänge der Backe.

iv) Da bei der Montage der wesentliche Weg durch das Einschieben der Backe gegeben ist, lässt sich die Gewindesteigung gegenüber dem Stand der Technik reduzieren, z.B. von 3mm auf 0.75mm.

Die Erfindung wird nachfolgend anhand der Zeichnung beispielsweise näher erläutert. Dabei zeigen:

Figur 1 Schieberstange mit Verzahnung zur Einstellung der Länge gemäss dem Stand der Technik (Deutsche Bahn AG);

Figur 2 Schieberstangenanordnung gemäss einer Ausführungsform der vorliegenden Erfindung gezeigt in drei Etappen i), ii) und iii) zur Einstellung und Fixierung;

Figur 3 Detailansicht der Elemente Backe und Schieber zur Schieberstangenanordnung gemäss der Figur 2.

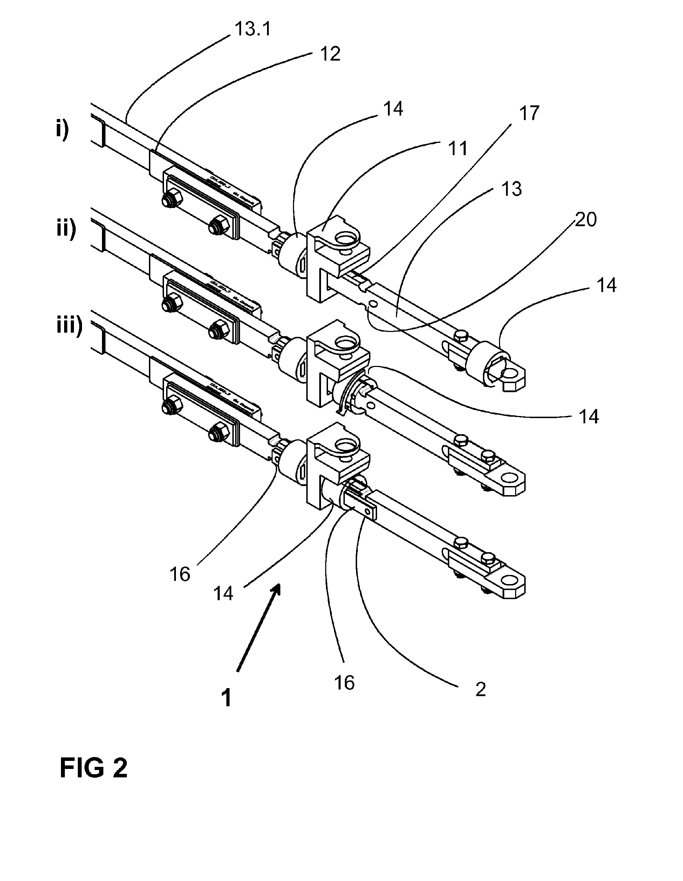

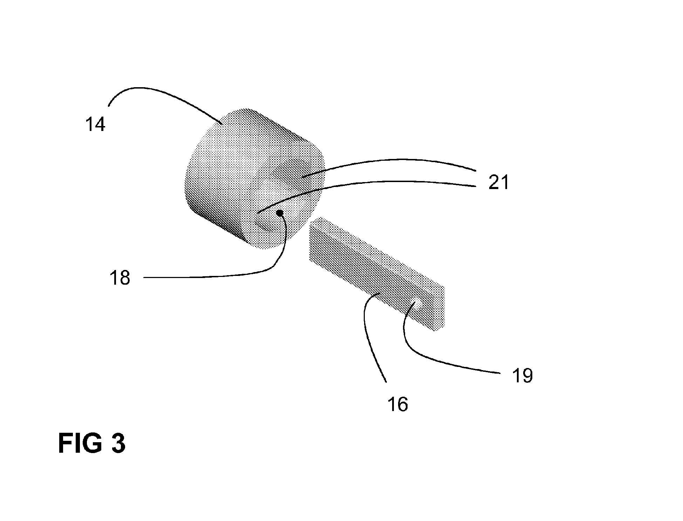

Figur 2 zeigt eine Schieberstangenanordnung in drei Phasen für die Montage. Die Schieberstange 13 weist im Querschnitt ein rechteckiges Profil auf. Im mittleren Teil der Schieberstange ist ein Aussengewinde 17 angebracht, das wegen dem rechteckigen Profil nicht «durchgehend» ausgebildet ist. Das Aussengewinde 17 zerfällt also in vier Teile bzw. Streifen. In der FIG 2 i) sind oben zwei disjunkte Streifen sichtbar, die ein Gewinde aufweisen, dazu ist jedoch aus Gründen der Übersichtlichkeit kein Bezugszeichen angegeben. Die anderen beiden Streifen befinden sich unten und sind in der FIG 2 nicht dargestellt. Das Lager 11 ist links bereits von einer eingeführten und fixierten Backe 14 umgeben. Eine weitere Backe 14 wird nun über die Schieberstange 13 geschoben. Diese Backe 14 weist ein Innengewinde 18 auf, siehe dazu die Figur 3 in der Darstellung links. Die Backe 14 weist zwei Ausnehmungen 14 auf und kann so über das Aussengewinde 17 der Schiebestange 13 geschoben werden und durch eine Vierteldrehung mit dem Aussengewinde 17 der Schieberstange 13 in Eingriff gebracht werden. Die ungefähre Position wird durch Schieben der Backe festgelegt, durch Drehen der Backe 14 erfolgt im wesentlichen nur noch die Fixierung der Backe. Lediglich durch eine Vierteldrehung braucht dann nun die Position des Lagers relativ zur Schieberstange 13 eingestellt zu werden, siehe dazu die FIG 2 ii). Dies gilt selbstverständlich auch für die in FIG 2 links des Lagers dargestellte Backe 14.

In der FIG 2 iii) ist die Arretierung bzw. Verriegelung der Backe 14 gezeigt: Die Backe 14 weist je eine um 180° versetzte Ausnehmung 21 auf. Die Granularität der Einstellung beträgt eine halbe Gewindesteigung des Gewindes 17, 18. Ist die Position des Lagers und somit die Drehposition der Backe 14 definitiv, wird in die Ausnehmung 21 ein Schieber 16 eingeschoben. Der Schieber 16 arretiert die Backe 14 formschlüssig mit der Schieberstange 13 gegen Verdrehen. Damit durch Vibrationen der Schieber 16 nicht herausfallen kann, wird dieser mit einer Befestigungsschraube 2 mit der Schieberstange 13 befestigt. Dazu weist die Schieberstange ein Gewindeloch 20 auf. Der Schieber 16 hat für die Durchführung der Befestigungsschraube 21 ein Loch 19 bzw. Befestigungsloch 19.

Der Schieber 16 ist aus einem Profileisen gefertigt.

Je nach Anwendung ist es auch denkbar, dass das Lager 11 nur auf einer Seite längs der Schiebestange 13 mit einer Backe 14 gemäss der vorlegenden Erfindung einstellbar ist.

Die Gewindesteigung liegt vorzugsweise im Bereich < 1mm, vorzugsweise 0.75mm. Dies hat den Vorteil einer feineren Einstellbarkeit, somit lässt sich die Position auf ± 0.375mm einstellen, also der halben Gewindesteigung.

### Liste der Bezugszeichen, Glossar

- 1: Beistellvorrichtung, Schieberstangenanordnung
- 2: Befestigungsschraube für Schieber
- 3: Zungengabel, auch Lager genannt
- 4: Stockschiene
- 5: Schiene, Backenschiene
- 6: Verzahnung
- 7: Mutter
- 8: Schraube
- 9: Schraubensicherungsblech
- 10: Sicherungsstift
- 11: Lager
- 12: Isolierplatte
- 13; 13.1: Schieberstange, Schieberstangenteil
- 14: Backe
- 15: Sicherungsspannbuchse
- 16: Schieber
- 17: Aussengewinde
- 18: Innengewinde
- 19: Befestigungsloch, Loch
- 20: Gewindeloch in Schieberstange für Befestigungsschraube
- 21: Ausnehmung in der Backe

### Liste der zitierten Dokumente

[1] DE 298 02 122 U1
   Schieberstange
   Ruhrtaler Gesenkschmiede F.W. Wengeler GmbH & Co. KG,
   DE - 58456 Witten
[2] DE 199 62 518 A1
   Schieberstange
   Carl Dan. Peddinghaus GmbH & Co KG,
   DE - 58256 Ennepetal

## Patentansprüche

1. Schieberstangenanordnung (1) für Weichenzungen, umfassend eine Schieberstange (13) und ein Lager (11), wobei
- die Schieberstange (13) ein Aussengewinde (17) aufweist,
- die Schieberstange (13) in das Lager (11) einführbar und
längs der Schieberstange (13) verschiebbar ist;
**dadurch gekennzeichnet, dass**
- zur Festlegung einer Position des Lagers (11) relativ zur Schieberstange (13) eine Backe (14) mit einem Innengewinde (18) in Eingriff mit dem Aussengewinde (17) in Eingriff gebracht wird, wobei die Backe (14) eine Ausnehmung (21) zum Einschieben über das Aussengewinde (17) aufweist und durch eine Vierteldrehung der Backe (14) die Position des Lagers (11) festlegbar ist und dass
- die Ausnehmung (21) zur Aufnahme eines Schiebers (16) vorgesehen ist, der mit der Schieberstange (13) formschlüssig verbindbar ist und so die Backe (14) gegen eine Verdrehung in der Endposition geschützt ist.

2. Schieberstangenanordnung (1; 13, 11) nach Anspruch 1, **dadurch gekennzeichnet, dass**
die Schieberstange (13) einen rechteckigen Querschnitt aufweist und das Aussengewinde (17) in vier disjunkte Teile längs der Schieberstange gegliedert ist.

3. Schieberstangenanordnung (1; 13, 11) nach einem der Ansprüche 1 bis 2,
**dadurch gekennzeichnet, dass**
das Lager (11) auf jeder Seite längs der Schieberstange (13) von einer Backe (14) fixiert ist.

4. Schieberstangenanordnung (1; 13, 11) nach einem der Ansprüche 1 bis 3
**dadurch gekennzeichnet, dass**
der Schieber (16) mit einer Befestigungsschraube (2) mit der Schieberstange (13) verbunden ist.

5. Schieberstangenanordnung (1; 13, 11) nach einem der Ansprüche 1 bis 4
**dadurch gekennzeichnet, dass**
Aussengewinde (17) und Innengewinde (18) eine Steigung von 0.75mm aufweisen.
